# EUROPÄISCHE PATENTSCHRIFT

(11) **EP 4 428 810 B1**
(45) Veröffentlichungstag und Bekanntmachung des Hinweises auf die Patenterteilung: **06.05.2026**
(21) Anmeldenummer: 23160792.0
(22) Anmeldetag: 08.03.2023
(51) Int. Cl.: G06T 7/00

(54) **VERFAHREN ZUM ABSCHÄTZEN EINER BAUTEILGÜTE EINES ELEKTRONENEMITTERS**
METHOD FOR ESTIMATING A COMPONENT QUALITY OF AN ELECTRON EMITTER
PROCÉDÉ D'ESTIMATION DE LA QUALITÉ D'UN COMPOSANT D'UN ÉMETTEUR D'ÉLECTRONS

(43) Veröffentlichungstag der Anmeldung: 11.09.2024
(73) Patentinhaber: Siemens Healthineers AG, 91301 Forchheim (DE)
(72) Erfinder: Selmaier, Andreas, 91052 Erlangen (DE); Teixeira, Brian, Lawrence Township, 08648 (US); Tschentscher, Malte, 96049 Bamberg (DE); Kapoor, Ankur, Plainsboro, 08536 (US); Singh, Vivek, Princeton, 08540 (US); Holch, Florian, 90478 Nürnberg (DE); Lühring, Patrick, 91315 Höchstadt (DE); Wießner, Michael, 97353 Wiesentheid (DE)
(74) Vertreter: Siemens Healthineers Patent Attorneys

(56) Entgegenhaltungen:
- EP-A1- 4 006 840
- WO-A1-99/53515
- JP-A- 2002 324 495
- JP-A- H0 729 494

## Beschreibung

Die Erfindung betrifft ein Computer-implementiertes Verfahren zum Abschätzen einer Bauteilgüte eines Elektronenemitters, ein Computer-implementiertes Verfahren zum Trainieren eines maschinellen Lernverfahrens zum Abschätzen einer Bauteilgüte eines Elektronenemitters, ein zugehöriges KI-Modell und ein zugehöriges Computerprogrammprodukt.

Ein Elektronenemitter wird herkömmlicherweise in einer Röntgenröhre eingesetzt. Mittels des Elektronenemitters werden freie Elektronen generiert, welche beispielsweise auf eine Anode hin beschleunigt werden können. Die Elektronenemitter kommen in unterschiedlicher Ausführung vor. Die Elektronenemitter können typischerweise in zwei Kategorien eingeteilt werden, in thermionische Emitter und kalte Emitter.

Bei der thermionischen Emission von Elektronen wird der Elektronenemitter zumindest teilweise aufgeheizt bis Elektronen aus dem erhitzten Emitterbereich austreten. Ein herkömmlicher thermionischer Emitter ist beispielsweise ein Wendelemitter. Eine Alternative dazu bildet der Flachemitter. Ein herkömmlicher Flachemitter besteht typischerweise aus einem Emitterblech. Das Emitterblech ist üblicherweise mit Einschnitten strukturiert.

Ein kalter Emitter ist beispielsweise ein Feldeffektemitter und weist typischerweise eine Vielzahl an Emitternadeln auf. Aus den Spitzen der Emitternadeln kann durch Anlegung einer Gatespannung unter Anwendung des Feldeffekts ein Elektronenstrom extrahiert werden.

In Folge der thermischen Belastung bei der Elektronenemission können Verformungen insbesondere bei thermionischen Elektronenemitter auftreten. Diese Verformungen sind beispielsweise eine C-Verformung, eine S-Verformung oder eine andersförmige Verformung. Eine außerordentliche Verformung ist insbesondere ein Artefakt in der Geometrie des Elektronenemitters, welches eine Bauteilgüte negativ beeinflussen und somit ein qualitätskritischer Parameter sein kann. Idealerweise ist die Elektronenemittergeometrie artefaktfrei. Die Bauteilgüte kann insbesondere mit einer Bauteillebensdauer korrelieren.

Um die Bauteilgüte abschätzen zu können, ist insbesondere eine Verknüpfung der Elektronenemittergeometrie des Elektronenemitters mit im Feld erzielten Leistungsdaten vergleichbarer Elektronenemitter nötig. Dafür muss typischerweise die Elektronenemittergeometrie umfassend parametrisiert werden. Die Elektronenemittergeometrie beschreibt insbesondere eine Positionierung des in einen Kathodenkopf eingesetzten Elektronenemitters. Die Parametrisierung erfolgt beispielsweise mithilfe einer Messmaschine und/oder erfordert insbesondere eine aufwändige Automatisierung, was in der Regel erhöhte Messzeiten unter atmosphärischem Druck mit sich bringt. Dabei sind Verweilzeiten unter atmosphärischem Druck für Vakuumkomponenten, wie Elektronenemitter es sind, kritisch zu bewerten. Die Abschätzung der Bauteilgüte ist komplex und übersteigt regelmäßig den von einem Nutzer des Elektronenemitters erfassbaren Informationsumfang. Die Komplexität dieser Abschätzung basiert insbesondere darauf, dass Varianzen im Mikrometerbereich berücksichtigt werden müssen und/oder eine starke Abhängigkeit von der spezifischen Nutzung des Elektronenemitters vorliegen kann.

Für eine effektive und/oder standardisierte Erfassung der Elektronenemittergeometrie und/oder für eine effiziente Abschätzung der Bauteilgüte, insbesondere mit Blick auf eine Verformung und/oder Fehlpositionierung des Elektronenemitters, fehlt aktuell ein adäquates Werkzeug. Die üblicherweise allein punktuell stattfindende Vermessung des Elektronenemitters ist regelmäßig dazu nicht ausreichend. Denn insbesondere die Messpunkteauswahl wird maßgeblich durch bereits bekannte Verformungen bestimmt. Hingegen bleiben bisher unbekannte Verformungen potenziell unentdeckt.

Die Erfassung der Elektronenemittergeometrie basiert herkömmlicherweise auf der Erfassung einer definierten Serie von Messpunkten. Üblicherweise beschränkt sich die Erfassung der Elektronenemittergeometrie auf solche Messpunkte, die den Emitteraußenspalt charakterisieren. Alternativ oder zusätzlich wird eine Höhe des in den Kathodenkopf eingesetzten Elektronenemitters relativ zum Kathodenkopf punktuell gemessen. Regelmäßig wird eine Positionierung relativ zum Mittelsteg nicht betrachtet. Typischerweise können aus den Messpunkten dazwischen liegende Distanzen errechnet werden. Die Erfassung der Elektronenemittergeometrie erfolgt üblicherweise mittels eines manuellen Messprozesses insbesondere in einem Fertigungsumfeld. Um dabei den manuellen Erfassungsaufwand gering zu halten, wird regelmäßig lediglich eine geringe Anzahl von Messpunkten erfasst. Die darauf basierenden Messergebnisse können somit nur einen groben Indikator über die Elektronenemittergeometrie liefern. Insbesondere liefern die herkömmlichen Messergebnisse keine umfassende Parametrisierung des Elektronenemitters.

Regelmäßig können daher die verschiedenen Typen an Verformungen an, insbesondere thermionischen, Elektronenemittern damit nicht präzise abgebildet und/oder differenziert werden. Insbesondere findet eine kontinuierliche Verknüpfung der erfassten Elektronenemittergeometrie mit im Feld erzielten Leistungsdaten nicht statt. In anderen Worten wird herkömmlicherweise die Abschätzung der Bauteillebenszeit einzeln und/oder nur bei Bedarf getriggert.

JP H07 29494 A beschäftigt sich mit dem präzisen Erkennen der relativen Positionsbeziehung der einzelnen Teile einer Elektronenkanone innerhalb kurzer Zeit. Eine Elektronenkanone wird auf einer Messbasis platziert und mit einer Kamera fotografiert. Die Ausgabe der Kamera wird einem Monitor und einem Datenanalyseteil zugeführt. Im Datenanalyseteil wird das Profil jedes Gitters der Elektronenkanone erkannt und auf dieser Grundlage der Mittelpunkt jedes Gitters berechnet. Indem die Mittelachse des Gitters, das eine Hauptlinse bildet, als Standard verwendet wird, werden die Verschiebung und Neigung der Mittelachsen anderer Gitter numerisch erfasst und diese werden zusammen mit den äußeren Formen der Gitter auf einem Monitor angezeigt.

Aus JP 2002 324495 A ist die Bereitstellung einer qualitativ hochwertigen Elektronenkanone, deren Elektrodenpositionsdaten zuverlässig erkannt werden können und die in der Lage ist, Anpassungen vorzunehmen, die das Erkennungsergebnis widerspiegeln, bekannt. Mindestens eine Vielzahl von Elektroden, die näher an einer Kathode liegen, sind so geformt, dass sie in Strahldurchgangsrichtung gesehen eine ebene Außenform unterschiedlicher Größe aufweisen, wobei die Elektrode mit der kleinsten Außenform an einer Position angeordnet ist, die der Kathode am nächsten liegt, und Elektroden mit einer großen Außenform nacheinander in entsprechend größeren Abständen von der Kathode angeordnet sind. Daten der Positionsabweichung von Referenzdaten in der X-Y-Ebene werden für jede Elektrode berechnet, indem Bilder der Vielzahl von Elektroden von der Kathodenseite in der Z-Achsenrichtung aufgenommen werden, die die Richtung der Strahldurchgangsachse ist, um Bilddaten in der X-Y-Ebene zu erhalten. Die erhaltenen Bilddaten werden einer Bildverarbeitung unterzogen, einschließlich der Extraktion von Umrissen und geraden Linien, und anschließend wird eine arithmetische Verarbeitung ausgeführt.

Der Erfindung liegt die Aufgabe zu Grunde, ein Computer-implementiertes Verfahren zum Abschätzen einer Bauteilgüte eines Elektronenemitters, ein Computer-implementiertes Verfahren zum Trainieren eines maschinellen Lernverfahrens zum Abschätzen einer Bauteilgüte eines Elektronenemitters, ein zugehöriges KI-Modell und ein zugehöriges Computerprogrammprodukt mit einer verbesserten Differenzierungsmöglichkeit anzugeben.

Die Aufgabe wird durch die Merkmale der unabhängigen Ansprüche gelöst. Vorteilhafte Ausgestaltungen sind in den Unteransprüchen beschrieben.

Unabhängig vom grammatikalischen Geschlecht eines bestimmten Begriffes sind Personen mit männlicher, weiblicher oder anderer Geschlechteridentität mit umfasst.

Das erfindungsgemäße Computer-implementierte Verfahren zum Abschätzen einer Bauteilgüte eines Elektronenemitters, welcher Teil einer Kathodeneinrichtung ist, wobei die Kathodeneinrichtung einen Kathodenkopf und den in den Kathodenkopf eingesetzten Elektronenemitter umfasst, wobei der Elektronenemitter insbesondere ein Flachemitter ist, umfasst folgende Schritte:
- Empfangen von einem Elektronenemitterbilddatensatz, wobei Bildinformationen des Elektronenemitterbilddatensatzes den in den Kathodenkopf eingesetzten Elektronenemitter zumindest teilweise abbilden,
- Empfangen eines Elektronenemittergeometriemodells aus einer Speichereinheit,
- Transformieren des empfangenen Elektronenemittergeometriemodells auf die Bildinformationen des Elektronenemitterbilddatensatzes, wobei als ein Ausgangsparameter des Transformierens eine Elektronenemittergeometrieinformation des Elektronenemitters errechnet wird,
- Ermitteln eines Ähnlichkeitsgrads des eingesetzten Elektronenemitters mit zumindest einen weiteren Elektronenemitter unter Verwendung der Elektronenemittergeometrieinformation,
- Abschätzen der Bauteilgüte in Abhängigkeit von dem ermittelten Ähnlichkeitsgrad mit dem zumindest einen weiteren Elektronenemitter.

Die Bauteilgüte des Elektronenemitters entspricht insbesondere einer Bauteillebensdauer des Elektronenemitters. Alternativ oder zusätzlich kann die Bauteilgüte des Elektronenemitters mit dem Ausbleiben eines Fehlerbilds und/oder einer mittels einer erzeugten Röntgenstrahlung erzielten Bildqualität korrelieren.

Die Bauteillebensdauer kann insbesondere in einer Zeiteinheit und/oder Lasteinheit angegeben werden. Die Lasteinheit kann beispielsweise eine Summe oder zeitliche Aufstellung einer Röntgenstrahlendosis, einer Grenzlast und/oder eines Heizstroms über die Lebensdauer des Elektronenemitters hinweg umfassen. Typischerweise geben im Feld erzielte Leistungsdaten Zeiteinheiten und/oder Lasteinheiten an. Nach dem Ende der Bauteillebensdauer kann der Elektronenemitter typischerweise nicht mehr im Rahmen der Spezifikation betrieben und/oder muss ausgetauscht werden. Innerhalb oder bis Ende der Bauteillebensdauer kann der Elektronenemitter im Rahmen der Spezifikation betrieben werden. Im Rahmen der Spezifikation bedeutet, dass im Feld erzielte Leistungsdaten des Elektronenemitters innerhalb der in der Spezifikation definierten Grenzen liegt.

Der Elektronenemitter ist insbesondere ein thermionischer Emitter. Alternativ ist denkbar, dass der Elektronenemitter ein kalter Emitter, beispielsweise ein Feldeffektemitter, ist. Der thermionische Emitter ist insbesondere ein Flachemitter, welche typischerweise aus einem Emitterblech mit Einschnitten besteht. Der thermionische Emitter kann alternativ ein Wendelemitter sein.

Die Kathodeneinrichtung weist relativ zu einer Anode typischerweise eine negative Hochspannung auf. Grundsätzlich ist es denkbar, dass die Kathodeneinrichtung auf Massepotential liegt. In diesem Fall weist die Kathodeneinrichtung eine negativere Hochspannung im Vergleich zur Anode auf. Zwischen der Kathodeneinrichtung und der Anode liegt typischerweise eine Hochspannung an. Grundsätzlich kann die Anode auf Massepotential liegen.

Mittels des Elektronenemitters generierte freie Elektronen werden insbesondere mittels der Hochspannung von der Kathodeneinrichtung in Richtung der Anode beschleunigt. Die Hochspannung kann in diesem Fall insbesondere Beschleunigungsspannung genannt sein. Bei der Wechselwirkung der Elektronen auf der Anode werden insbesondere Röntgenstrahlen generiert. Typischerweise 99% der kinetischen Energie der beschleunigten Elektronen wird beim Auftreffen auf der Anode in Wärme gewandelt. Der Bereich, in welchem die Elektronen auftreffen, wird insbesondere Brennfleck genannt.

Um die Anode besser kühlen zu können, kann die Anode grundsätzlich relativ zu den emittierten Elektronen drehbar angeordnet sein. Rotiert die Anode, ist der Brennfleck Teil einer kreisförmigen Brennbahn. In diesem Fall ist die Anode beispielsweise eine Drehanode. Eine Röntgenröhre mit einer solchen Drehanode und Kathodeneinrichtung wird beispielsweise dahingehend unterschieden, inwiefern die Kathodeneinrichtung gemeinsam mit der Anode rotiert oder nicht. Im ersten Fall ist die Röntgenröhre insbesondere eine Drehkolbenröntgenröhre und im letzteren Fall ist die Röntgenröhre insbesondere eine Drehanodenröntgenröhre. Wenn die Anode ortsfest ist, ist die Röntgenröhre insbesondere eine Stehanodenröntgenröhre. Alternativ ist es denkbar, dass die Kathodeneinrichtung innerhalb einer Linearbeschleunigereinheit angeordnet ist.

Die mittels der Beschleunigungsspannung beschleunigten Elektronen weisen eine Energie von bis zu 150 keV insbesondere für eine diagnostische Bildgebung und/oder Werkstoffprüfung auf. Mittels der Linearbeschleunigereinheit beschleunigte Elektronen können eine Energie von bis zu 20 MeV für eine nichtzerstörerische Bildgebung und/oder Werkstoffprüfung und/oder Therapie aufweisen. Abhängig von der Energie der Elektronen weist die Energie der Röntgenstrahlung beispielsweise maximal 150 keV bzw. 20 MeV auf.

Die Kathodeneinrichtung kann aus dem Kathodenkopf und den in den Kathodenkopf eingesetzten Elektronenemitter bestehen. Der Kathodenkopf kann zu einem Sperren der freien Elektronen oder zu einem Ablenken der freien Elektronen eingerichtet sein. Das elektrische Potential der Kathodeneinrichtung liegt insbesondere am Kathodenkopf an. Der Kathodenkopf kann insbesondere für eine Kühlung des Elektronenemitters eingerichtet sein. Der Kathodenkopf und der Elektronenemitter können galvanisch getrennt und/oder voneinander elektrisch isoliert sein.

Dass der Elektronenemitter in den Kathodenkopf eingesetzt ist, kann insbesondere bedeuten, dass der Elektronenemitter abschließend in den Kathodenkopf montiert ist. Abschließend bedeutet, dass der Montageprozess der Kathodeneinrichtung, insbesondere des Elektronenemitters in den Kathodenkopf, bereits vollständig durchlaufen ist. Typischerweise wird eine Positionierung des Elektronenemitters relativ zum Kathodenkopf konstant gehalten, beispielsweise mittels geeigneter Befestigungsmittel, und/oder nicht mehr verändert. Beispielsweise kann der Elektronenemitter mittels Befestigungsmittel wie z.B. einer Schraube, einer Feder, eines Bolzens, eines Schweißpunkts und/oder eines Lötpunkts relativ zum Kathodenkopf befestigt sein.

Der Elektronenemitterbilddatensatz kann beispielsweise mittels eines Sensors, insbesondere einer Kamera und/oder eines Scanners und/oder eines Mikroskops und/oder eines Weißlichtinterferometers, aufgenommen sein oder werden. Der Sensor kann ein 2D- oder 3D-Sensor sein. Der Elektronenemitterbilddatensatz kann insbesondere 2D-Bildinformationen insbesondere zur Beschreibung einer lateralen Ausdehnung und optional zusätzlich Tiefeninformationen umfassen.

Der Elektronenemitterbilddatensatz kann ein Foto sein, in welchem die Bildinformationen enthalten sind. Der Elektronenemitterbilddatensatz kann eine Serie an Fotos und/oder einen Film sein. Zusätzlich kann der Elektronenemitterbilddatensatz Metadaten enthalten, welche die Bildinformationen beschreiben. Die Bildinformationen können insbesondere Graustufen, Schwarz-Weiß oder Farben enthalten. Der Elektronenemitterbilddatensatz ist vorzugsweise in einer digitalen Datei abgespeichert, vorzugsweise in einem Bildformat. Der Elektronenemitterbilddatensatz kann insbesondere einer digitalisierten Variante eines analogen Fotos entsprechen. Die Bildinformationen können in einen Bildraum oder in einen Frequenzraum transformiert sein. Die Bildinformationen können beispielsweise als Rohbildinformationen und/oder als insbesondere von dem Sensor nachbearbeitete Endbildinformationen vorliegen.

Die Bildinformationen zeigen den Elektronenemitter zumindest teilweise, vorzugsweise vollständig. Die Bildinformationen bilden insbesondere vorzugsweise den Elektronenemitter und den Kathodenkopf zumindest teilweise ab. Es ist denkbar, dass die Bildinformationen weder den gesamten Elektronenemitter noch den gesamten Kathodenkopf abbilden. Grundsätzlich ist es denkbar, dass die Bildinformationen den Kathodenkopf gar nicht abbilden.

Die Bildinformationen bilden den Elektronenemitter vorzugsweise 1-zu-1 ab. Vorteilhafterweise erscheint der Elektronenemitter daher nicht verzerrt in den Bildinformationen. Die Bildinformationen bilden den Elektronenemitter vorzugsweise entzerrt und/oder nicht mehr verzerrt ab. Es ist denkbar, dass die Bildinformationen eine Verzerrung durch eine Optik bei der Aufnahme der Bildinformationen nicht mehr enthalten, sondern diesbezüglich korrigiert sind. Beispielsweise können die nachbearbeiteten Endbildinformationen derart korrigiert sein.

Der Elektronenemitterbilddatensatz kann insbesondere von dem Sensor und/oder einer Speichereinheit empfangen werden. Das Empfangen kann ein Bereitstellen des Elektronenemitterbilddatensatzes durch den Sensor und/oder die Speichereinheit umfassen. Der Elektronenemitterbilddatensatz wird beispielsweise von einer Recheneinheit abgerufen und daraufhin in der Recheneinheit empfangen. Das Empfangen des Elektronenemitterbilddatensatzes kann ein Übertragen des Elektronenemitterbilddatensatzes über eine Schnittstelle, welche insbesondere eine Netzwerkschnittstelle sein kann, umfassen.

Das Empfangen des Elektronenemitterbilddatensatzes kann ein Rekonstruieren der Bildinformationen und/oder ein Filtern der Bildinformationen und/oder ein Annotieren der Bildinformationen umfassen. Das Rekonstruieren kann insbesondere ein Anwenden einer (inversen) Fouriertransformation auf die Bildinformationen umfassen. Das Filtern kann insbesondere einen Region-Growing, eine Kantgenglättung, eine Kantenhervorhebung, eine Bildsegmentierung und/oder ein Kontrastieren der Bildinformationen umfassen. Das Annotieren kann insbesondere ein Ortsmarkenerkennen und/oder ein Mustererkennen umfassen. Das Rekonstruieren und/oder das Filtern und/oder das Annotieren kann beispielsweise in der Recheneinheit und/oder in dem Sensor und/oder in der Speichereinheit erfolgen. Die Speichereinheit kann Teil der Recheneinheit und/oder des Sensors sein.

Das Empfangen des Elektronenemittergeometriemodells kann ein Abfragen des Elektronenemittergeometriemodells aus der Speichereinheit umfassen. Das Elektronenemittergeometriemodell kann beispielsweise über die Schnittstelle übertragen werden.

Das Elektronenemittergeometriemodell entspricht beispielsweise einer 1-zu-1-Abbildung des oder eines Elektronenemitters vor dem Einsetzen in den Kathodenkopf. In diesem Fall bildet das Elektronenemittergeometriemodell insbesondere den oder einen Elektronenemitter ohne Verformung ab. Das Elektronenemittergeometriemodell zeigt insbesondere den oder einen Elektronenemitter schematisch und/oder abstrahiert.

Alternativ oder zusätzlich ist es denkbar, dass das Elektronenemittergeometriemodell beispielsweise ausgehend von der 1-zu-1-Abbildung angepasst ist an akzeptable Verformungen am Elektronenemitter, welche im Rahmen des Einsetzens in den Kathodenkopf auftreten können. Die akzeptablen Verformungen können insbesondere im Rahmen einer Spezifikation liegen und/oder aufgrund der Befestigungsmittel im Rahmen der Spezifikation zwingend erfolgen. Die akzeptablen Verformungen sind typischerweise unschädlich und/oder unkritisch und/oder unwesentlich für eine Qualität und somit die Bauteilgüte und/oder Bauteillebensdauer des Elektronenemitters. Die Anpassung der 1-zu-1-Abbildung kann beispielsweise dadurch erfolgen, dass Elektronenemittergeometrieinformationen solcher weiterer Elektronenemitter modelliert und/oder gemittelt werden, welche eine vergleichsweise hohe Bauteilgüte und/oder lange Bauteillebensdauern aufweisen. Ausgehend von dieser Modellierung und/oder Mittelung kann vorzugsweise das Elektronenemittergeometriemodell angepasst sein oder werden.

Typischerweise ist das Elektronenemittergeometriemodell mit einer Vielzahl an die Elektronenemittergeometrie beschreibenden Messpunkten annotiert. Das Annotieren des Elektronenemittergeometriemodells erfolgt beispielsweise automatisch und/oder durch einen Nutzer. Die Messpunkte können insbesondere eine Kante und/oder einen Schwerpunkt und/oder einen Mittelpunkt kennzeichnen.

Das Transformieren des empfangenen Elektronenemittergeometriemodells auf die Bildinformationen umfasst insbesondere ein Verschieben zumindest eines Messpunkts des Elektronenemittergeometriemodells an einen in der Bildinformation abgebildeten Messpunkt. Wenn das Elektronenemittergeometriemodell den Bildinformationen bezüglich der Geometrie zu 100% gleicht bzw. wenn das Elektronenemittergeometriemodell bezüglich der Geometrie identisch ist mit den Bildinformationen, ist der Ausgangsparameter beispielsweise eine 1-zu-1-Abbildung. In diesem Fall umfasst das Transformieren kein Verschieben zumindest eines Messpunkts.

Das Transformieren ist insbesondere eine Bildtransformation. Das Transformieren erfolgt vorzugsweise unter Minimierung eines komplexen Korrelationsfaktors. Das Transformieren kann insbesondere eine rigide und/oder eine nicht-rigide Transformation umfassen. Es ist denkbar, dass die Bildinformationen und/oder das Elektronenemittergeometriemodell unterteilt sind in verschiedene Bereiche mit einer rigiden Transformation oder einer nicht-rigiden Transformation.

Das Transformieren und/oder das Errechnen des Ausgangsparameters erfolgt beispielsweise in der Recheneinheit, beispielsweise mittels einer CPU oder GPU. Üblicherweise wird der Ausgangsparameter beim Transformieren errechnet.

Die Elektronenemittergeometrieinformation enthält insbesondere eine Relation der Bildinformationen zum Elektronenemittergeometriemodell. Die Elektronenemittergeometrieinformation kennzeichnet insbesondere einen Unterschied zwischen den Bildinformationen und dem Elektronenemittergeometriemodell. Die Elektronenemittergeometrieinformation beschreibt insbesondere das Verschieben und/oder das Nicht-Verschieben des zumindest einen Messpunkts. Die Elektronenemittergeometrieinformation kann insbesondere eine räumliche Verschiebung zumindest eines Messpunkts und/oder eine relative Distanz zwischen zwei Messpunkten beschreiben. Die Elektronenemittergeometrieinformation ist beispielsweise eine Transformationsmatrix. In der einfachsten Variante entspricht die Transformationsmatrix einer 1-zu-1-Abbildung und/oder ist gleich 1. Zusätzlich kann die Elektronenemittergeometrieinformation die Bildinformationen enthalten.

Die Elektronenemittergeometrieinformation kann eine Einstufung der Bildinformationen in eine relative Kategorie wie z.B. nicht verformt, insbesondere 1-zu-1-Abbildung, leicht verformt, stark verformt oder nicht transformierbar beispielsweise, weil zu stark verformt und/oder eine quantitative Kategorie wie z.B. X Verformungen der Art Y, umfassen.

Das Ermitteln des Ähnlichkeitsgrads kann ein Ermitteln des ähnlichsten Elektronenemitters der weiteren Elektronenemitter und/oder ein Festlegen des Ähnlichkeitsgrad ausgehend von der Ähnlichkeit zwischen dem ähnlichsten Elektronenemitter und den Elektronenemitter umfassen. Alternativ oder zusätzlich kann der ermittelte Ähnlichkeitsgrad beispielsweise dazu verwendet werden, den ähnlichsten Elektronenemitter der weiteren Elektronenemitter zu identifizieren und/oder auszuwählen. Das Ermitteln des Ähnlichkeitsgrads erfolgt insbesondere in der Recheneinheit.

Das Ermitteln des Ähnlichkeitsgrads unter Verwendung der Elektronenemittergeometrieinformation bedeutet insbesondere, dass ein Abgleichen der Elektronenemittergeometrieinformation mit einer Elektronenemittergeometrieinformation des zumindest einen weiteren Elektronenemitters erfolgt. Das Ermitteln des Ähnlichkeitsgrads kann ein Abrufen und/oder ein Empfangen und/oder ein Bereitstellen der Elektronenemittergeometrieinformation des zumindest einen weiteren Elektronenemitters umfassen.

Das Ermitteln des Ähnlichkeitsgrad kann mit mehreren Elektronenemittern der weiteren Elektronenemitter oder mit allen weiteren Elektronenemittern erfolgen. Es ist denkbar, dass der Ähnlichkeitsgrad mit demselben weiteren Elektronenemitter mehrmals ermittelt wird. Das Ermitteln des Ähnlichkeitsgrads kann ein in einen Rang einreihen und/oder ein Filtern des Ähnlichkeitsgrads umfassen. Das Ermitteln des Ähnlichkeitsgrads kann ein Klassifizieren der ermittelten Ähnlichkeitsgrade und ein Auswählen einer Klasse mit klassifizierten Ähnlichkeitsgraden oder eines einzigen Ähnlichkeitsgrads einer Klasse umfassen.

Der Ähnlichkeitsgrad ist insbesondere ein Maß der Ähnlichkeit. Der Ähnlichkeitsgrad beschreibt insbesondere eine Ähnlichkeit in Bezug auf die Elektronenemittergeometrieinformationen. Typischerweise ist der Ähnlichkeitsgrad desto höher, je geringer die Unterschiede zwischen dem Elektronenemitter bzw. der Elektronenemittergeometrieinformation des Elektronenemitters und dem zumindest einen weiteren Elektronenemitter bzw. der Elektronenemittergeometrieinformation des zumindest einen weiteren Elektronenemitter ist.

Der Ähnlichkeitsgrad kann ein Korrelationsfaktor und/oder eine geometrische Abbildung sein. Der Ähnlichkeitsgrad kann beispielsweise in Kategorien "unähnlich" oder "ähnlich" angegeben sein. Alternativ oder zusätzlich kann der Ähnlichkeitsgrad einen Wert zwischen 0 und 100% sein. In diesem Fall kann beispielsweise ein Schwellwert eine Grenze definieren, welche ähnliche und unähnliche Elektronenemitter separiert.

Das Abschätzen der Bauteilgüte kann insbesondere einem Abschätzen der Bauteillebensdauer entsprechen. Das Abschätzen der Bauteilgüte kann ein Berechnen und/oder ein Ermitteln der Bauteilgüte sein. Das Abschätzen der Bauteilgüte kann ein Übermitteln der abgeschätzten Bauteilgüte an die Speichereinheit umfassen.

Die Bauteilgüte kann beispielsweise derart abgeschätzt werden, dass bei einem ersten Ähnlichkeitsgrad, welcher geringer ist als ein zweiter Ähnlichkeitsgrad, eine Bauteilgüte von null zugeordnet wird. In diesem Fall weist beispielsweise der in den Kathodenkopf eingesetzte Elektronenemitter eine außerordentliche Verformung auf, welche außerhalb der Spezifikation liegt und/oder nicht akzeptabel ist. Die außerordentliche Verformung kann insbesondere eine gravierende Verformung sein. Dem eingesetzten Elektronenemitter kann insbesondere ein Wert entsprechend "verformt" und/oder "defekt" zugeordnet werden.

Alternativ kann bei dem zweiten Ähnlichkeitsgrad die Bauteilgüte abgeschätzt werden ausgehend von einem Ausgangswert, welcher von dem zumindest einen weiteren Elektronenemitter mit dem insbesondere höchsten Ähnlichkeitsgrad beeinflusst wird. Der Ausgangswert kann beispielsweise auf mit im Feld erzielten Leistungsdaten des zumindest einen weiteren Elektronenemitters basieren oder von diesen abhängen. Die Bauteilgüte kann alternativ oder zusätzlich derart abgeschätzt werden, dass die Klasse mit dem zumindest einen weiteren Elektronenemitter ausgewählt und die im Feld erzielten Leistungsdaten derjenigen Elektronenemitter der ausgewählten Klasse herangezogen werden, um den Ausgangswert zu bilden. Beispielsweise können die im Feld erzielten Leistungsdaten gemittelt und/oder modelliert werden, um den Ausgangswert zu bilden. Alternativ kann aus den im Feld erzielten Leistungsdaten eine Bauteilgüte des zumindest einen weiteren Elektronenemitters extrahiert und als abgeschätzte Bauteilgüte bereitgestellt werden.

Grundsätzlich wird die Bauteilgüte desto höher und/oder die Bauteillebensdauer desto länger abgeschätzt, je besser die im Feld zu erzielenden abgeschätzten Leistungsdaten sind oder je besser die im Feld erwartbaren Leistungsdaten sind. In anderen Worten wird die Bauteilgüte desto höher und/oder die Bauteillebensdauer desto länger abgeschätzt, je unwahrscheinlicher es ist, dass der Elektronenemitter vergleichsweise früh ausfällt und/oder ein Fehlerbild zeigt und/oder ein Artefakt auftritt. Die Bauteilgüte bzw. die Bauteillebensdauer kann desto niedriger bzw. kürzer sein, je schlechter die im Feld erwartbaren Leistungsdaten des Elektronenemitter sind.

Eine Ausführungsform sieht vor, dass ein einzelner Elektronenemitterbilddatensatz empfangen wird und die Bauteilgüte des Elektronenemitters mittels des einzelnen Elektronenemitterbilddatensatzes des Elektronenemitters abgeschätzt wird. Diese Ausführungsform ist insbesondere vorteilhaft, weil dadurch das Abschätzen der Bauteilgüte maximal vereinfacht wird. Das bedeutet, dass nicht mehrere Elektronenemitterbilddatensätze empfangen werden, sondern nur der einzelne Elektronenemitterbilddatensatz.

Eine Ausführungsform sieht vor, dass die abgeschätzte Bauteilgüte des Elektronenemitters in der Speichereinheit abgespeichert wird. Diese Ausführungsform ermöglicht vorteilhafterweise einen Zugriff auf die abgeschätzte Bauteilgüte, beispielsweise im Betrieb des Elektronenemitters.

Eine Ausführungsform sieht vor, dass das Ermitteln des Ähnlichkeitsgrads ein Eingeben der Elektronenemittergeometrieinformation in ein mittels eines maschinellen Lernverfahrens trainiertes KI-Modell und ein Bereitstellen des Ähnlichkeitsgrads an einem Ausgang des KI-Modells umfasst. Das KI-Modell kann vorteilhafterweise zum Ermitteln des Ähnlichkeitsgrads verwendet werden, wenn es gemäß dem erfindungsgemäßen Trainingsverfahren trainiert ist. In diesem Fall verknüpft das KI-Modell typischerweise eine Bauteilgüte und/oder im Feld erzielte Leistungsdaten mit Elektronenemittergeometrieinformationen. Die Verknüpfung in dem KI-Modell kann nach dem Trainieren validiert werden. Das KI-Modell kann insbesondere zum Filtern der Bildinformationen und/oder zum Annotieren der Bildinformationen wie zuvor als optionalen Schritt beim Empfangen des Elektronenemitterbilddatensatzes beschrieben eingerichtet sein. Das KI-Modell kann insbesondere an das Elektronenemittergeometriemodell angepasst sein oder werden. Das Ermitteln des Ähnlichkeitsgrads kann dem Eingeben der Elektronenemittergeometrieinformation in das KI-Modell entsprechen. Das Abschätzen der Bauteilgüte kann grundsätzlich mittels des KI-Modells erfolgen.

Eine Ausführungsform sieht vor, dass mittels des KI-Modells die eingegebene Elektronenemittergeometrieinformation dimensionsreduziert wird und der Ähnlichkeitsgrad mittels der dimensionsreduzierten Elektronenemittergeometrieinformation ermittelt wird. Mittels des KI-Modells kann insbesondere ein Vektor für jeden Elektronenemitter berechnet werden, wobei die Dimension des Vektors kleiner ist als die Anzahl der im Feld erzielten Leistungsdaten, wobei die Dimension des Vektors bevorzugt kleiner oder gleich fünf ist, besonders bevorzugt kleiner oder gleich drei ist. Die Dimension des Vektors kann insbesondere gleich zwei und/oder größer eins sein.

Mittels des KI-Modells wird insbesondere eine dimensionsreduzierte Informationsdichteverteilung generiert. Die dimensionsreduzierte Informationsdichteverteilung ist insbesondere ein Ausgabeparameter des KI-Modells und/oder ein sogenannter "latent space" bzw. "latent feature space" bzw. "embedding space". Beim Generieren der dimensionsreduzierten Informationsdichteverteilung werden insbesondere die Eingabedaten derart miteinander verknüpft, dass unterscheidungsirrelevante Eingabedaten im Vergleich zu unterscheidungsrelevanten Eingabedaten komprimiert und/oder entfernt werden. Unterscheidungsrelevante Eingabedaten ermöglichen insbesondere eine Abgrenzung und/oder resultieren in einer größeren abstrakten Distanz zwischen den Elektronenemittern. Unterscheidungsirrelevante Eingabedaten können eine Bezeichnung des Elektronenemitters und/oder eine allgemein gültige technische Information sein. Unterscheidungsrelevante Eingabedaten können insbesondere die dem ausgewählten Bauteil zugeordnete Elektronenemittergeometrieinformationen und die Elektronenemittergeometrieinformationen anderer Bauteile, welche insbesondere mit den im Feld erzielten Leistungsdaten verknüpfbar sind, sein.

Es ist denkbar, dass das KI-Modell lediglich unterscheidungsrelevante Eingabedaten prozessiert und unterscheidungsirrelevante Eingabedaten herausfiltert und/oder verwirft. Eine nicht-binäre, beispielsweise lineare Gewichtung der Eingabedaten zwischen unterscheidungsrelevant und unterscheidungsirrelevant kann vorzugsweise mittels des KI-Modells erfolgen. Durch das Anwenden des KI-Modells können insbesondere Elektronenemittergeometrieinformationen und/oder im Feld erzielte Leistungsdaten von verschiedenen Elektronenemittern verknüpft werden.

Das KI-Modell ermöglicht insbesondere eine Extrapolation oder eine Interpolation insbesondere verstreuter Eingabedaten. Bei der Anwendung des KI-Modells wird die Anzahl der Eingabedaten üblicherweise derart reduziert, dass die dimensionsreduzierte Informationsdichteverteilung beispielsweise zweidimensional oder dreidimensional ist und/oder visualisiert werden kann. Dadurch kann ein Nutzer Unterschiede in der Elektronenemittergeometrie als (zuvor sogenannte abstrakte) Distanzen zwischen den dimensionsreduzierten Eingabedaten ermitteln und/oder wahrnehmen. Grundsätzlich ist es denkbar, dass die Distanzen zwischen den dimensionsreduzierten Eingabedaten automatisch ermittelt werden. Das KI-Modell ist insbesondere derart trainiert, dass solche Elektronenemitter in der Informationsdichteverteilung desto näher beieinander sind, je ähnlicher deren unterscheidungsrelevante Eingabedaten sind.

Eine Ausführungsform sieht vor, dass mittels des KI-Modells eine erste Klasse mit Elektronenemittergeometrien mit einem Artefakt von einer zweiten Klasse mit Elektronenemittergeometrien ohne Artefakt distanziert werden und dass der Ähnlichkeitsgrad mittels einer Zuordnung der Elektronenemittergeometrieinformation zu der ersten Klasse oder der zweiten Klasse ermittelt wird. Diese Ausführungsform beschreibt insbesondere das Klassifizieren beim Ermitteln des Ähnlichkeitsgrads. Grundsätzlich ist es denkbar, dass das KI-Modell die Klassen nach Anzahl und/oder Schwere der Verformungen unterscheidet. Es sind insbesondere mehr als zwei Klassen möglich. Mögliche Klassen können sein der Einstufung entsprechend "nicht verformt", "akzeptable Verformungen" und "außerordentliche Verformungen".

Das erfindungsgemäße Computer-implementierte Verfahren zum Bereitstellen eines trainierten KI-Modells zur Verwendung für das erfindungsgemäße Computer-implementierte Verfahren nach einem der vorhergehenden Ansprüche umfasst die folgenden Schritte:
- Empfangen von im Feld erzielten Leistungsdaten weiterer Elektronenemitter als Eingabedaten,
- Anwenden eines neuronalen Netzwerks, welches einen Encoder und einen Decoder umfasst, auf die Eingabedaten, wobei ein Ausgabevektor berechnet wird, wobei der Encoder eine erste Zahl von Eingabewerten auf eine zweite Zahl von Ausgabewerten abbildet, und wobei der Decoder eine zweite Zahl von Eingabewerten auf eine erste Zahl von Ausgabewerten abbildet, wobei die zweite Zahl kleiner ist als die erste Zahl,
- Anpassen eines Parameters des neuronalen Netzwerks basierend auf einem Vergleich des Ausgabevektors mit den Eingabedaten,
- Ausgeben des Decoders als trainiertes KI-Modell.

Eine Ausführungsform sieht vor, dass zusätzlich Elektronenemittergeometrieinformationen der weiteren Elektronenemitter als Eingabedaten empfangen werden. Diese Ausführungsform ist insbesondere vorteilhaft, weil dadurch das Abschätzen der Bauteilgüte verbessert wird.

Ein erfindungsgemäßes KI-Modell ist zur Verwendung für das erfindungsgemäße Computer-implementierte Verfahren ausgebildet. Das KI-Modell ist insbesondere gemäß dem Computer-implementierten Verfahren zum Bereitstellen des trainierten KI-Modells trainiert.

Eine Kathodeneinrichtung weist vorteilhafterweise
- einen Kathodenkopf und
- einen in den Kathodenkopf eingesetzten Elektronenemitter auf, wobei eine Bauteilgüte des Elektronenemitters mit einem erfindungsgemäßen Computer-implementierten Verfahren zum Abschätzen einer Bauteilgüte des Elektronenemitters abgeschätzt wird oder ist.

Eine Ausführungsform sieht vor, dass der Elektronenemitter ein Flachemitter ist. Diese Ausführungsform ist insbesondere vorteilhaft, weil der Flachemitter aufgrund seiner Starrheit eher zu Verformungen neigen kann und somit die Bauteilgüte des Flachemitters erfindungsgemäß abgeschätzt werden kann.

Das Computerprogrammprodukt kann ein Computerprogramm sein oder ein Computerprogramm umfassen. Das Computerprogrammprodukt weist insbesondere die Programmcodemittel auf, welche die erfindungsgemäßen Verfahrensschritte abbilden. Dadurch kann das erfindungsgemäße Verfahren definiert und wiederholbar ausgeführt sowie eine Kontrolle über eine Weitergabe des erfindungsgemäßen Verfahrens ausgeübt werden. Das Computerprogrammprodukt ist vorzugsweise derart konfiguriert, dass die Recheneinheit mittels des Computerprogrammprodukts die erfindungsgemäßen Verfahrensschritte ausführen kann. Die Programmcodemittel können insbesondere in einen Speicher der Recheneinheit geladen und typischerweise mittels eines Prozessors der Recheneinheit mit Zugriff auf den Speicher ausgeführt werden. Wenn das Computerprogrammprodukt, insbesondere die Programmcodemittel, in der Recheneinheit ausgeführt wird, können typischerweise alle erfindungsgemäßen Ausführungsformen des beschriebenen Verfahrens durchgeführt werden. Das Computerprogrammprodukt ist beispielsweise auf einem physischen, computerlesbaren Medium gespeichert und/oder digital als Datenpaket in einem Computernetzwerk hinterlegt. Das Computerprogrammprodukt kann das physische, computerlesbare Medium und/oder das Datenpaket in dem Computernetzwerk darstellen. So kann die Erfindung auch von dem physischen, computerlesbaren Medium und/oder dem Datenpaket in dem Computernetzwerk ausgehen. Das physische, computerlesbare Medium ist üblicherweise unmittelbar mit der Recheneinheit verbindbar, beispielsweise indem das physische, computerlesbare Medium in ein DVD-Laufwerk eingelegt oder in einen USB-Port gesteckt wird, wodurch die Recheneinheit auf das physische, computerlesbare Medium insbesondere lesend zugreifen kann. Das Datenpaket kann vorzugsweise aus dem Computernetzwerk abgerufen werden. Das Computernetzwerk kann die Recheneinheit aufweisen oder mittels einer Wide-Area-Network- (WAN) bzw. einer (Wireless-)Local-Area-Network-Verbindung (WLAN oder LAN) mit der Recheneinheit mittelbar verbunden sein. Beispielsweise kann das Computerprogrammprodukt digital auf einem Cloud-Server an einem Speicherort des Computernetzwerks hinterlegt sein, mittels des WAN über das Internet und/oder mittels des WLAN bzw. LAN auf die Recheneinheit insbesondere durch das Aufrufen eines Downloadlinks, welcher zu dem Speicherort des Computerprogrammprodukts verweist, übertragen werden.

Bei der Beschreibung der Vorrichtung erwähnte Merkmale, Vorteile oder alternative Ausführungsformen sind ebenso auf das Verfahren zu übertragen und umgekehrt. Mit anderen Worten können Ansprüche auf das Verfahren mit Merkmalen der Vorrichtung weitergebildet sein und umgekehrt. Insbesondere kann die erfindungsgemäße Vorrichtung in dem Verfahren verwendet werden.

Im Folgenden wird die Erfindung anhand der in den Figuren dargestellten Ausführungsbeispiele näher beschrieben und erläutert. Grundsätzlich werden in der folgenden Figurenbeschreibung im Wesentlichen gleich bleibende Strukturen und Einheiten mit demselben Bezugszeichen wie beim erstmaligen Auftreten der jeweiligen Struktur oder Einheit benannt.

Es zeigen:
Fig. 1 ein erfindungsgemäßes Computer-implementiertes Verfahren zum Abschätzen einer Bauteilgüte eines Elektronenemitters,
Fig. 2 das Verfahren in einem ersten Ausführungsbeispiel,
Fig. 3 das Verfahren in einem zweiten Ausführungsbeispiel,
Fig. 4 ein erfindungsgemäßes Computer-implementiertes Verfahren zum Bereitstellen eines trainierten KI-Modells und
Fig. 5 eine erfindungsgemäße Kathodeneinrichtung.

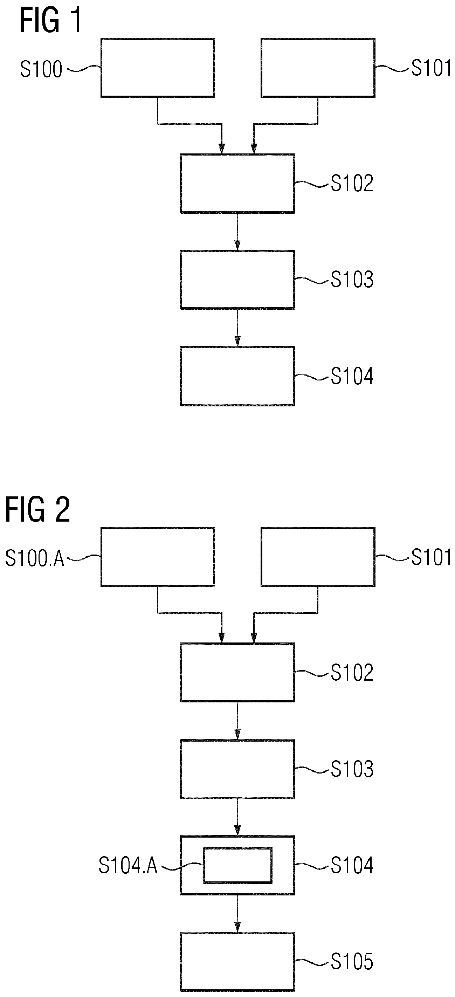

**Fig. 1** zeigt das erfindungsgemäße Computer-implementierte Verfahren zum Abschätzen einer Bauteilgüte eines Elektronenemitters zum Abschätzen einer Bauteilgüte eines Elektronenemitters, welcher Teil einer Kathodeneinrichtung ist, wobei die Kathodeneinrichtung einen Kathodenkopf und den in den Kathodenkopf eingesetzten Elektronenemitter umfasst, wobei der Elektronenemitter insbesondere ein Flachemitter ist, in einem Flussdiagramm mit den Schritten S100 bis S104.

Verfahrensschritt S100 kennzeichnet ein Empfangen von einem Elektronenemitterbilddatensatz, wobei Bildinformationen des Elektronenemitterbilddatensatzes den in den Kathodenkopf eingesetzten Elektronenemitter zumindest teilweise abbilden.

Verfahrensschritt S101 kennzeichnet ein Empfangen eines Elektronenemittergeometriemodells aus einer Speichereinheit. Das Elektronenemittergeometriemodell kann mit einer Vielzahl an die Elektronenemittergeometrie beschreibenden Messpunkten annotiert sein.

Verfahrensschritt S102 kennzeichnet ein Transformieren des empfangenen Elektronenemittergeometriemodells auf die Bildinformationen des Elektronenemitterbilddatensatzes, wobei als ein Ausgangsparameter des Transformierens eine Elektronenemittergeometrieinformation des Elektronenemitters errechnet wird. Das Transformieren erfolgt insbesondere unter Minimierung eines komplexen Korrelationsfaktors. Die Elektronenemittergeometrieinformation kann eine räumliche Verschiebung zumindest eines Messpunkts und/oder eine relative Distanz zwischen zwei Messpunkten beschreiben.

Verfahrensschritt S103 kennzeichnet ein Ermitteln eines Ähnlichkeitsgrads des eingesetzten Elektronenemitters mit zumindest einen weiteren Elektronenemitter unter Verwendung der Elektronenemittergeometrieinformation.

Verfahrensschritt S104 kennzeichnet ein Abschätzen der Bauteilgüte in Abhängigkeit von dem ermittelten Ähnlichkeitsgrad mit dem zumindest einen weiteren Elektronenemitter.

**Fig. 2** zeigt ein erstes Ausführungsbeispiel des Verfahrens in einem Flussdiagramm.

Verfahrensschritt S100.A kennzeichnet, dass ein einzelner Elektronenemitterbilddatensatz empfangen wird.

Verfahrensschritt S104.A kennzeichnet, dass die Bauteilgüte des Elektronenemitters mittels des einzelnen Elektronenemitterbilddatensatzes des Elektronenemitters abgeschätzt wird.

Verfahrensschritt S105 kennzeichnet, dass die abgeschätzte Bauteilgüte des Elektronenemitters in einer Speichereinheit abgespeichert wird.

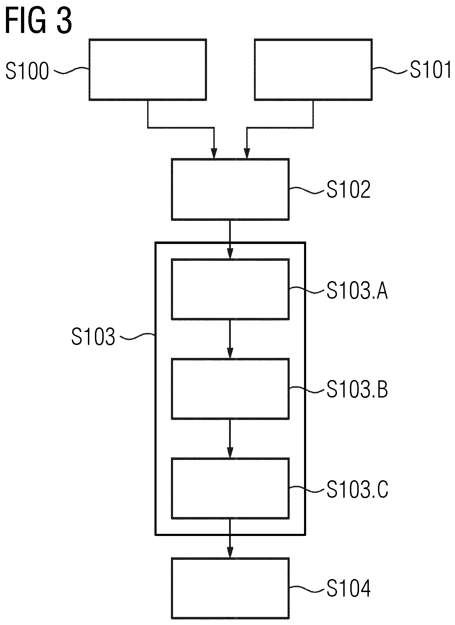

**Fig. 3** zeigt ein zweites Ausführungsbeispiel des Verfahrens in einem Flussdiagramm.

Verfahrensschritt S103.A kennzeichnet, dass das Ermitteln des Ähnlichkeitsgrads ein Eingeben der Elektronenemittergeometrieinformation in ein mittels eines maschinellen Lernverfahrens trainiertes KI-Modell und ein Bereitstellen des Ähnlichkeitsgrads an einem Ausgang des KI-Modells umfasst.

Verfahrensschritt S103.B kennzeichnet, dass mittels des KI-Modells die eingegebene Elektronenemittergeometrieinformation dimensionsreduziert wird und der Ähnlichkeitsgrad mittels der dimensionsreduzierten Elektronenemittergeometrieinformation ermittelt wird.

Verfahrensschritt S103.C kennzeichnet, dass mittels des KI-Modells eine erste Klasse mit Elektronenemittergeometrien mit einem Artefakt von einer zweiten Klasse mit Elektronenemittergeometrien ohne Artefakt distanziert werden und dass der Ähnlichkeitsgrad mittels einer Zuordnung der Elektronenemittergeometrieinformation zu der ersten Klasse oder der zweiten Klasse ermittelt wird.

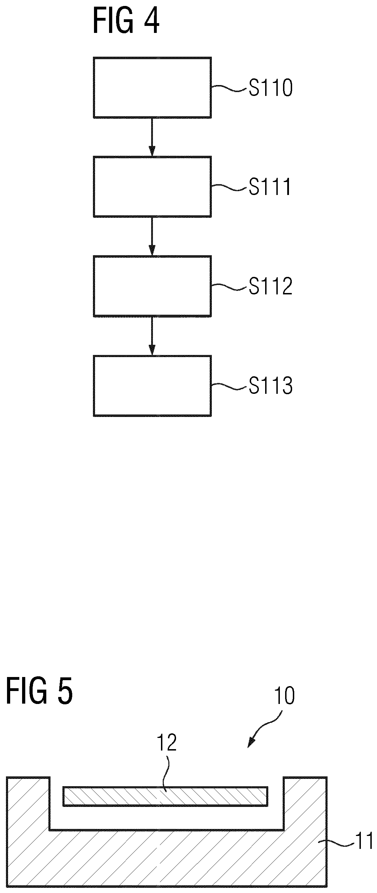

**Fig. 4** zeigt ein erfindungsgemäßes Computer-implementiertes Verfahren zum Bereitstellen eines trainierten KI-Modells in einem Flussdiagramm mit den Schritten S110 bis S113.

Verfahrensschritt S110 kennzeichnet ein Empfangen von im Feld erzielten Leistungsdaten weiterer Elektronenemitter als Eingabedaten. Es ist denkbar, dass zusätzlich Elektronenemittergeometrieinformationen der weiteren Elektronenemitter als Eingabedaten empfangen werden.

Verfahrensschritt S111 kennzeichnet ein Anwenden eines neuronalen Netzwerks, welches einen Encoder und einen Decoder umfasst, auf die Eingabedaten, wobei ein Ausgabevektor berechnet wird, wobei der Encoder eine erste Zahl von Eingabewerten auf eine zweite Zahl von Ausgabewerten abbildet, und wobei der Decoder eine zweite Zahl von Eingabewerten auf eine erste Zahl von Ausgabewerten abbildet, wobei die zweite Zahl kleiner ist als die erste Zahl.

Verfahrensschritt S112 kennzeichnet ein Anpassen eines Parameters des neuronalen Netzwerks basierend auf einem Vergleich des Ausgabevektors mit den Eingabedaten.

Verfahrensschritt S113 kennzeichnet ein Ausgeben des Decoders als trainiertes KI-Modell.

**Fig. 5** zeigt eine vorteilhafte Kathodeneinrichtung 10 in einem schematischen Querschnitt.

Die Kathodeneinrichtung 10 weist einen Kathodenkopf 11 und einen in den Kathodenkopf 11 eingesetzten Elektronenemitter 12 auf. Der Elektronenemitter 12 ist ein Flachemitter. Eine Bauteilgüte des Elektronenemitters 12 ist mit dem erfindungsgemäßen Verfahren abgeschätzt.

Die Kathodeneinrichtung 10 kann insbesondere Teil einer evakuierten Röntgenröhre sein. In diesem Fall ist gegenüber von der Kathodeneinrichtung 10 typischerweise eine Anode angeordnet, auf welche die mittels des Elektronenemitter 12 generierten Elektronen auftreffen, sofern eine Beschleunigungsspannung zwischen der Kathodeneinrichtung 10 und der Anode anliegt. Bei der Wechselwirkung der Elektronen auf der Anode werden die Röntgenstrahlen generiert. Die Röntgenstrahlen können insbesondere bei der diagnostischen Bildgebung, z.B. einer Computertomographie, einer Mammographie und/oder einer Angiographie oder bei einer Werkstoffprüfung eingesetzt werden, bei welchen geschwächte Röntgenstrahlenprofile zu einem Bild rekonstruiert werden können.

Obwohl die Erfindung im Detail durch die bevorzugten Ausführungsbeispiele näher illustriert und beschrieben wurde, so ist die Erfindung dennoch nicht durch die offenbarten Beispiele eingeschränkt und andere Variationen können vom Fachmann hieraus abgeleitet werden, ohne den Schutzumfang der Erfindung zu verlassen.

## Patentansprüche

1. Computer-implementiertes Verfahren zum Abschätzen einer Bauteilgüte eines Elektronenemitters, welcher Teil einer Kathodeneinrichtung ist, wobei die Kathodeneinrichtung einen Kathodenkopf und den in den Kathodenkopf eingesetzten Elektronenemitter umfasst, wobei der Elektronenemitter insbesondere ein Flachemitter ist, mit den folgenden Schritten:
- Empfangen von einem Elektronenemitterbilddatensatz, wobei Bildinformationen des Elektronenemitterbilddatensatzes den in den Kathodenkopf eingesetzten Elektronenemitter zumindest teilweise abbilden,
- Empfangen eines Elektronenemittergeometriemodells aus einer Speichereinheit,
- Transformieren des empfangenen Elektronenemittergeometriemodells auf die Bildinformationen des Elektronenemitterbilddatensatzes, wobei als ein Ausgangsparameter des Transformierens eine Elektronenemittergeometrieinformation des Elektronenemitters errechnet wird,
- Ermitteln eines Ähnlichkeitsgrads des eingesetzten Elektronenemitters mit zumindest einen weiteren Elektronenemitter unter Verwendung der Elektronenemittergeometrieinformation,
- Abschätzen der Bauteilgüte in Abhängigkeit von dem ermittelten Ähnlichkeitsgrad mit dem zumindest einen weiteren Elektronenemitter.

2. Verfahren nach Anspruch 1,
wobei ein einzelner Elektronenemitterbilddatensatz empfangen wird und die Bauteilgüte des Elektronenemitters mittels des einzelnen Elektronenemitterbilddatensatzes des Elektronenemitters abgeschätzt wird.

3. Verfahren nach einem der vorhergehenden Ansprüche,
wobei das Elektronenemittergeometriemodell mit einer Vielzahl an die Elektronenemittergeometrie beschreibenden Messpunkten annotiert ist.

4. Verfahren nach einem der vorhergehenden Ansprüche,
wobei das Transformieren unter Minimierung eines komplexen Korrelationsfaktors erfolgt.

5. Verfahren nach einem der vorhergehenden Ansprüche,
wobei die Elektronenemittergeometrieinformation eine räumliche Verschiebung zumindest eines Messpunkts und/oder eine relative Distanz zwischen zwei Messpunkten beschreibt.

6. Verfahren nach einem der vorhergehenden Ansprüche,
wobei das Ermitteln des Ähnlichkeitsgrads ein Eingeben der Elektronenemittergeometrieinformation in ein mittels eines maschinellen Lernverfahrens trainiertes KI-Modell und ein Bereitstellen des Ähnlichkeitsgrads an einem Ausgang des KI-Modells umfasst.

7. Verfahren nach Anspruch 6,
wobei mittels des KI-Modells die eingegebene Elektronenemittergeometrieinformation dimensionsreduziert wird und der Ähnlichkeitsgrad mittels der dimensionsreduzierten Elektronenemittergeometrieinformation ermittelt wird.

8. Verfahren nach einem der Ansprüche 6 oder 7,
wobei mittels des KI-Modells eine erste Klasse mit Elektronenemittergeometrien mit einem Artefakt von einer zweiten Klasse mit Elektronenemittergeometrien ohne Artefakt distanziert werden und wobei der Ähnlichkeitsgrad mittels einer Zuordnung der Elektronenemittergeometrieinformation zu der ersten Klasse oder der zweiten Klasse ermittelt wird.

9. Verfahren nach einem der vorhergehenden Ansprüche,
wobei die abgeschätzte Bauteilgüte des Elektronenemitters in einer Speichereinheit abgespeichert wird.

10. Computer-implementiertes Verfahren zum Bereitstellen eines trainierten KI-Modells zur Verwendung für ein Computer-implementiertes Verfahren nach einem der vorhergehenden Ansprüche, umfassend die folgenden Schritte:
- Empfangen von im Feld erzielten Leistungsdaten weiterer Elektronenemitter als Eingabedaten,
- Anwenden eines neuronalen Netzwerks, welches einen Encoder und einen Decoder umfasst, auf die Eingabedaten, wobei ein Ausgabevektor berechnet wird,
wobei der Encoder eine erste Zahl von Eingabewerten auf eine zweite Zahl von Ausgabewerten abbildet, und wobei der Decoder eine zweite Zahl von Eingabewerten auf eine erste Zahl von Ausgabewerten abbildet, wobei die zweite Zahl kleiner ist als die erste Zahl,
- Anpassen eines Parameters des neuronalen Netzwerks basierend auf einem Vergleich des Ausgabevektors mit den Eingabedaten,
- Ausgeben des Decoders als trainiertes KI-Modell.

11. Verfahren nach Anspruch 10,
wobei zusätzlich Elektronenemittergeometrieinformationen der weiteren Elektronenemitter als Eingabedaten empfangen werden.

12. KI-Modell zur Verwendung für ein Verfahren nach einem der Ansprüche 1 bis 9, wobei das KI-Modell nach einem der Ansprüche 10 oder 11 generiert ist.

13. Computerprogrammprodukt, welches direkt in einen Speicher einer Recheneinheit ladbar ist, mit Programmcodemitteln, um ein Verfahren nach einem der Ansprüche 1 bis 11 auszuführen, wenn das Computerprogrammprodukt in der Recheneinheit ausgeführt wird.

## Claims

1. Computer-implemented method for assessing a component quality of an electron emitter, which is part of a cathode facility, wherein the cathode facility comprises a cathode head and the electron emitter inserted in the cathode head, wherein the electron emitter is, in particular, a flat emitter, with the following steps:
- receiving an electron emitter image dataset, wherein items of image information of the electron emitter image dataset at least partially map the electron emitter inserted in the cathode head,
- receiving an electron emitter geometry model from a memory unit,
- transforming the received electron emitter geometry model to the items of image information of the electron emitter image dataset, wherein an item of electron emitter geometry information of the electron emitter is calculated as an output parameter of the transformation,
- ascertaining a degree of similarity of the inserted electron emitter with at least one further electron emitter by using the electron emitter geometry information,
- assessing the component quality as a function of the ascertained degree of similarity with the at least one further electron emitter.

2. Method according to claim 1,
wherein a single electron emitter image dataset is received and the component quality of the electron emitter is assessed by means of the single electron emitter image dataset of the electron emitter.

3. Method according to one of the preceding claims,
wherein the electron emitter geometry model is annotated with a large number of measuring points describing the electron emitter geometry.

4. Method according to one of the preceding claims,
wherein transforming takes place while minimising a complex correlation factor.

5. Method according to one of the preceding claims,
wherein the electron emitter geometry information describes a spatial shift of at least one measuring point and/or a relative distance between two measuring points.

6. Method according to one of the preceding claims,
wherein ascertaining the degree of similarity comprises inputting the electron emitter geometry information into a AI model trained by means of a machine learning method and providing the degree of similarity at an output of the AI model.

7. Method according to claim 6,
wherein by means of the AI model, the input electron emitter geometry information is dimensionally reduced and the degree of similarity is ascertained by means of the dimensionally reduced electron emitter geometry information.

8. Method according to one of claims 6 or 7,
wherein by means of the AI model, a first category with electron emitter geometries with an artifact is distanced from a second category with electron emitter geometries without artifact and wherein the degree of similarity is ascertained by means of an allocation of the electron emitter geometry information to the first category or the second category.

9. Method according to one of the preceding claims,
wherein the assessed component quality of the electron emitter is stored in a memory unit.

10. Computer-implemented method for providing a trained AI model for use for a computer-implemented method according to one of the preceding claims, comprising the following steps:
- receiving performance data, obtained in the field, of further electron emitters as input data,
- applying a neural network, which comprises an encoder and a decoder, to the input data, wherein an output vector is calculated,
wherein the encoder maps a first number of input values to a second number of output values, and wherein the decoder maps a second number of input values to a first number of output values, wherein the second number is smaller than the first number,
- adapting a parameter of the neural network on the basis of a comparison of the output vector with the input data,
- outputting the decoder as a trained AI model.

11. Method according to claim 10,
wherein items of electron emitter geometry information of the further electron emitters are additionally received as input data.

12. AI model for use for a method according to one of claims 1 to 9, wherein the AI model is generated according to one of claims 10 or 11.

13. Computer program product, which can be loaded directly into a memory of a computing unit, with program code means in order to carry out a method according to one of claims 1 to 11 when the computer program product is executed in the computing unit.

## Revendications

1. Procédé mis en œuvre par ordinateur d'estimation de la qualité d'un composant d'un émetteur d'électrons, qui fait partie d'un dispositif cathodique, dans lequel le dispositif cathodique comprend une tête de cathode et l'émetteur d'électrons inséré dans la tête de cathode, dans lequel l'émetteur d'électrons est en particulier un émetteur plat, comprenant les stades suivants :
- réception d'un ensemble de données d'image de l'émetteur d'électrons, dans lequel des informations d'image de l'ensemble de données d'image de l'émetteur d'électrons représentent au moins en partie l'émetteur d'électrons inséré dans la tête de la cathode,
- réception d'un modèle géométrique de l'émetteur d'électrons à partir d'une unité de mémoire,
- transformation du modèle géométrique de l'émetteur d'électrons reçu en les informations d'image de l'ensemble de données d'image de l'émetteur d'électrons, dans lequel on calcule, comme paramètre de sortie de la transformation, une information géométrique de l'émetteur d'électrons,
- détermination d'un degré de similitude de l'émetteur d'électrons inséré avec au moins un autre émetteur d'électrons en utilisant l'information géométrique de l'émetteur d'électrons,
- estimation de la qualité du composant en fonction du degré de similitude déterminé avec le au moins un autre émetteur d'électrons.

2. Procédé suivant la revendication 1,
dans lequel on reçoit un ensemble de données d'image de l'émetteur d'électrons et on estime la qualité d'un composant de l'émetteur d'électrons au moyen de l'ensemble individuel de données d'image de l'émetteur d'électrons.

3. Procédé suivant l'une des revendications précédentes,
dans lequel le modèle géométrique de l'émetteur d'électrons est annoté d'une pluralité de points de mesure décrivant la géométrie de l'émetteur d'électrons.

4. Procédé suivant l'une des revendications précédentes,
dans lequel la transformation s'effectue en minimisant un facteur de corrélation complexe.

5. Procédé suivant l'une des revendications précédentes,
dans lequel l'information géométrique de l'émetteur d'électrons décrit un décalage dans l'espace d'au moins un point de mesure et/ou une distance relative entre deux points de mesure.

6. Procédé suivant l'une des revendications précédentes,
dans lequel la détermination du degré de similitude comprend une entrée de l'information géométrique de l'émetteur d'électrons dans un modèle KI entraîné, au moyen d'un procédé d'apprentissage par machine, et une mise à disposition du degré de similitude à une sortie du modèle KI.

7. Procédé suivant la revendication 6,
dans lequel, au moyen du modèle KI, on réduit en dimension l'information géométrique entrée de l'émetteur d'électrons et on détermine le degré de similitude au moyen de l'information géométrique réduite de l'émetteur d'électrons.

8. Procédé suivant l'une des revendications 6 ou 7,
dans lequel, au moyen du modèle KI, on fait le départ entre une première classe ayant des géométries d'émetteur d'électrons avec un artefact et une deuxième classe ayant des géométries d'émetteur d'électrons sans artefact, et dans lequel on détermine le degré de similitude au moyen d'une affectation de l'information géométrique de l'émetteur d'électrons à la première classe ou à la deuxième classe.

9. Procédé suivant l'une des revendications précédentes,
dans lequel on met dans l'unité de mémoire la qualité estimée du composant de l'émetteur d'électrons.

10. Procédé mis en œuvre par ordinateur de mise à disposition d'un modèle KI entraîné à utiliser pour un procédé mis en œuvre par ordinateur suivant l'une des revendications précédentes, comprenant les stades suivants :
- réception comme données d'entrée de données de puissance, atteintes dans le champ, d'autres émetteurs d'électrons,
- application d'un réseau neuronal, qui comprend un codeur et un décodeur, aux données d'entrée, dans lequel on calcule un vecteur de sortie,
dans lequel le codeur représente un premier nombre de valeurs d'entrée par un deuxième nombre de valeurs de sortie et dans lequel le décodeur représente un deuxième nombre de valeurs d'entrée par un premier nombre de valeurs de sortie, dans lequel le deuxième nombre est plus petit que le premier nombre,
- adaptation d'un paramètre du réseau neuronal sur la base d'une comparaison entre le vecteur de sortie et les données d'entrée,
- sortie du décodeur comme modèle KI entraîné.

11. Procédé suivant la revendication 10,
dans lequel, en outre, on reçoit des informations géométriques des autres émetteurs d'électrons comme données d'entrée.

12. Modèle KI à utiliser pour un procédé suivant l'une des revendications 1 à 9, dans lequel le modèle KI est créé suivant l'une des revendications 10 ou 11.

13. Produit de programme d'ordinateur, qui peut échanger directement dans la mémoire d'une unité informatique, comprenant des moyens de code de programme pour exécuter un procédé suivant l'une des revendications 1 à 11, lorsque le produit de programme d'ordinateur est exécuté dans l'unité informatique.
